# EUROPEAN PATENT SPECIFICATION

(11) **EP 2 966 373 B1**
(45) Date of publication and mention of the grant of the patent: **07.12.2022**
(21) Application number: 13876911.2
(22) Date of filing: 06.03.2013
(51) Int. Cl.: F24F 11/30, G08C 17/02

(54) **AIR CONDITIONER AND OPERATIONAL STATUS DISPLAY DEVICE**
KLIMAANLAGE UND VORRICHTUNG ZUR BETRIEBSSTATUSANZEIGE
APPAREIL DE CONDITIONNEMENT D'AIR ET DISPOSITIF D'AFFICHAGE D'ÉTAT DE FONCTIONNEMENT

(43) Date of publication of application: 13.01.2016
(73) Proprietor: Mitsubishi Electric Corporation, Tokyo 100-8310 (JP)
(72) Inventor: HASHIMOTO, Takayasu, Tokyo 100-8310 (JP); IIZAWA, Daisuke, Tokyo 100-8310 (JP)
(74) Representative: Pfenning, Meinig & Partner mbB
(86) International application number: PCT/JP2013/056136
(87) International publication number: WO 2014/136218

(56) References cited:
- EP-A2- 1 811 241
- JP-A- 2000 513 798
- JP-A- 2005 291 610
- JP-A- 2005 291 610
- JP-A- 2011 145 932
- JP-A- 2012 013 403
- JP-A- 2012 013 403
- JP-A- 2012 174 127
- JP-A- 2012 225 590
- JP-A- 2012 243 258
- US-A1- 2011 046 792

## Description

### TECHNICAL FIELD

The present invention relates to an operation state display device that displays an operation state of an air conditioner, and an air conditioner equipped with the operation state display device.

### BACKGROUND ART

A control device of an air conditioner according to Patent Document 1, for example, includes an operation state detecting means that detects whether the air conditioner is going to lower or increase the temperature of a space to be air-conditioned or is going to maintain the present condition, and an operation state display means that displays a present operation state on the basis of detection results.

Further, an air conditioner according to Patent Document 2, for example, includes a display portion illuminated in a color corresponding to an operation state (operation mode), and the display portion displays the light having such a color as may image the corresponding operation state: for example, blue for when a cooling operation is performed, red for when a heating operation is performed, and green for when a dehumidifying operation is performed.

Further, an air conditioner according to Patent Document 3 displays an abnormal state by blinking an LED based on a blink pattern according to a sensor indicating abnormality occurrence.

### CITATION LIST

### PATENT DOCUMENT

Patent Document 1: Japanese Patent Application Laid-open No. H5-118628
Patent Document 2: Japanese Patent Application Laid-open No. 2002-13795
Patent Document 3: Japanese Patent Application Laid-open No. H9-152235

JP2012013403A provides an air conditioning system capable of easily recognizing transition of a degree of comfort when performing air conditioning by a plurality of air conditioning apparatuses jointly controlled.

### SUMMARY OF THE INVENTION

### PROBLEMS TO BE SOLVED BY THE INVENTION

In recent years, there has been proposed a heat pump type air-conditioning and hot water supply system (Air To Water: ATW system) that heats water by a refrigerant compressed by a refrigerant compressor.

### <Characteristic of ATW system>

This ATW system is characterized in that it takes time for an actual room temperature or a hot water supply temperature to reach a set value from a time that changes a setting in a controller. Therefore, in order to maintain an energy saving property and comfortability, it needs to be changed to an optimum setting at an early stage.

### <Actual Use State in Controller>

Because many users manage the ATW system by automatic control in accordance with a previously decided operation plan (a schedule function), the operation frequency of the controller is very low.

Further, even when it is thought that many users want to improve the energy saving and comfortability of the ATW system, many users give up a setting operation in the controller because they are unfamiliar with the setting operation, and do not know a setting method therefor.

Therefore, when the user knows the setting method for improving the energy saving and comfortability of the ATW system, it is expected that the controller may be operated more frequently.

However, because the conventional air conditioner as described in the above Patent Documents 1 to 3 is configured to display the present operation state or abnormal state, the future operation plan cannot be seen, and it is thus unlikely to determine whether the setting change is necessary at the early stage. Therefore, there is a problem such that the user is unlikely to notice a situation in which the setting change is necessary.

Further, the conventional air conditioner is configured to change the setting after confirming the information by displaying each screen of a past operation history and the future operation plan, resulting in too many operational procedures, and thus, there is a problem such that the setting change cannot be carried out quickly and easily.

The present invention is made to solve the foregoing problems, and an object of the invention is to provide an operation state display device that can notice easily at the early stage the situation in which the setting change is necessary, and that can carry out the setting change easily, and provide an air conditioner that uses the operation state display device.

### MEANS FOR SOLVING THE PROBLEMS

An operation state display device of the present invention includes: an operation information acquirer that acquires information on past, present, and future operation states; an operation state display portion that is lighted at fixed positions in lighting colors indicating past, present, and future operation states, respectively, based on the state acquired by the operation information acquirer; and a screen display portion that displays a screen concerning a history of the past operation state, a setting of the present operation state, or the setting of the future operation state.

An air conditioner of the invention is configured to display the operation state by using the aforementioned operation state display device.

### EFFECT OF THE INVENTION

According to the present invention, when the portion is lighted in the lighting colors indicating not only the present operation state but also the past and future operation states, a situation requiring a setting change in the air conditioner can be brought to be noticed easily at an early stage. Further, when the input operation portion receives the screen selection of the history screen of the past operation state, the setting screen of the present operation state, or the setting screen of the future operation state to perform the screen display, in the case that the setting change of the air conditioner is necessary, the screen for the setting change can be displayed quickly and easily, and thus, the setting change can be carried out easily.

### BRIEF DESCRIPTION OF THE DRAWINGS

Fig. 1 is an external view illustrating a front surface of a casing of an operation state display device according to Embodiment 1 of the present invention.
Fig. 2 is a block diagram illustrating a configuration example of an air-conditioning and hot water supply system according to Embodiment 1.
Fig. 3 is a block diagram illustrating a configuration example of the operation state display device according to Embodiment 1.
Fig. 4 is a flowchart illustrating a state display operation of the operation state display device according to Embodiment 1.
Fig. 5 is a flowchart illustrating a screen transition operation of the operation state display device according to Embodiment 1, and illustrating an example of a case of transiting to an operation history display screen.
Fig. 6 is a diagram of illustrating a screen transition example of the operation state display device according to Embodiment 1.
Fig. 7 is a flowchart illustrating the screen transition operation of the operation state display device according to Embodiment 1, and illustrating an example of a case of transiting to a setting content display screen.
Fig. 8 is a flowchart illustrating the screen transition operation of the operation state display device according to Embodiment 1, and illustrating an example of a case of transiting to an operation plan display screen.
Fig. 9 is an external view illustrating a front surface of a casing of an operation state display device according to Embodiment 2 of the present invention.
Fig. 10 is a block diagram illustrating a configuration example of the operation state display device according to Embodiment 2.

### MODES FOR CARRYING OUT THE INVENTION

Hereinafter, in order to describe the present invention in more detail, embodiments for implementing the present invention will be described with reference to the accompanying drawings. Embodiment 1 of the invention.

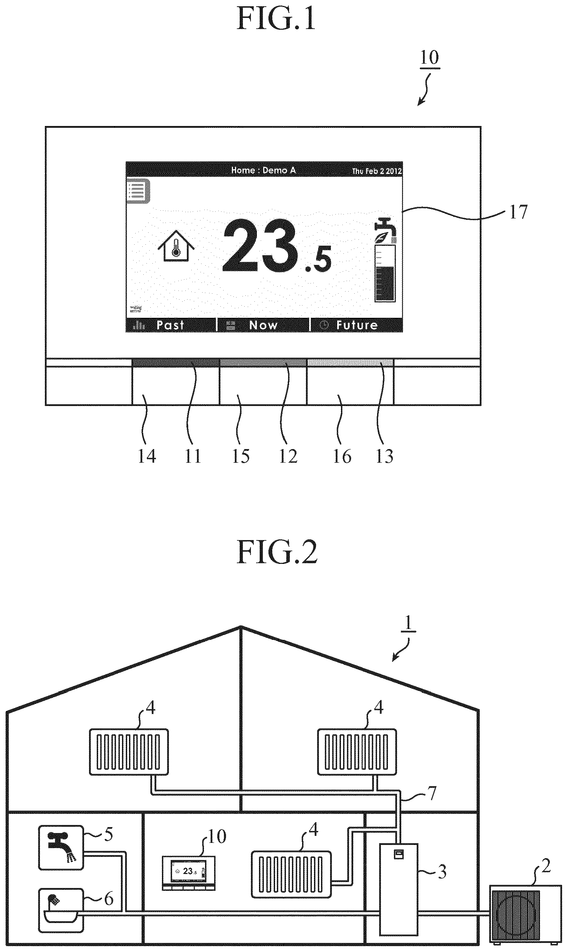

Fig. 1 is an external view illustrating a configuration example of a front surface of a casing of an operation state display device 10 according to Embodiment 1 of the invention. Fig. 2 is a configuration example of a heat-pump type air-conditioning and hot water supply system 1 to which the operation state display device 10 is applied. As illustrated in Fig. 2, the air-conditioning and hot water supply system 1 includes: a heat pump unit 2 that heats water; a hot water storage unit 3 that stores hot water produced by the heat pump unit 2; a radiator 4 that heats the inside of a room by using the hot water in the hot water storage unit 3 as a heat source; a hydrant 5 and a bathtub 6 to each of which the hot water is supplied from the hot water storage unit 3; and a pipe 7 that connects between these devices. Further, the air-conditioning and hot water supply system 1 includes the operation state display device 10 that displays an operation state. Each device in the air-conditioning and hot water supply system 1 and the operation state display device 10 are configured to be in a wireless connection or a wired connection to be thus communicable with each other.

As illustrated in Fig. 1, on the front surface of the casing of the operation state display device 10, there are disposed a past operation state display portion 11, a present operation state display portion 12, and a future operation state display portion 13 that express, in respective light colors, past, present, and future operation modes (operation states) of the air-conditioning and hot water supply system 1. The past operation state display portion 11 is configured to have LEDs (light emitting diodes) capable of lighting in a plurality of lighting colors such as blue, orange, and green. The present operation state display portion 12 and future operation state display portion 13 each are also similarly configured to have the LEDs.

Further, on the front surface of the casing, there are also disposed: a past input operation portion 14, a present input operation portion 15, and a future input operation portion 16 that receive input operations for displaying screens concerning a past operation history, present setting information, and a future operation plan, respectively; and a screen display portion 17 that displays the screen corresponding to the input operation. The past input operation portion 14, present input operation portion 15, and future input operation portion 16 each are a button, for example, and the screen display portion 17 is a touch display, for example.

Additionally, the screen display portion 17 in Fig. 1 displays an initial screen indicating a setting value of a room temperature targeted by the radiator 4, and a remaining amount of the hot water in the hot water storage unit 3.

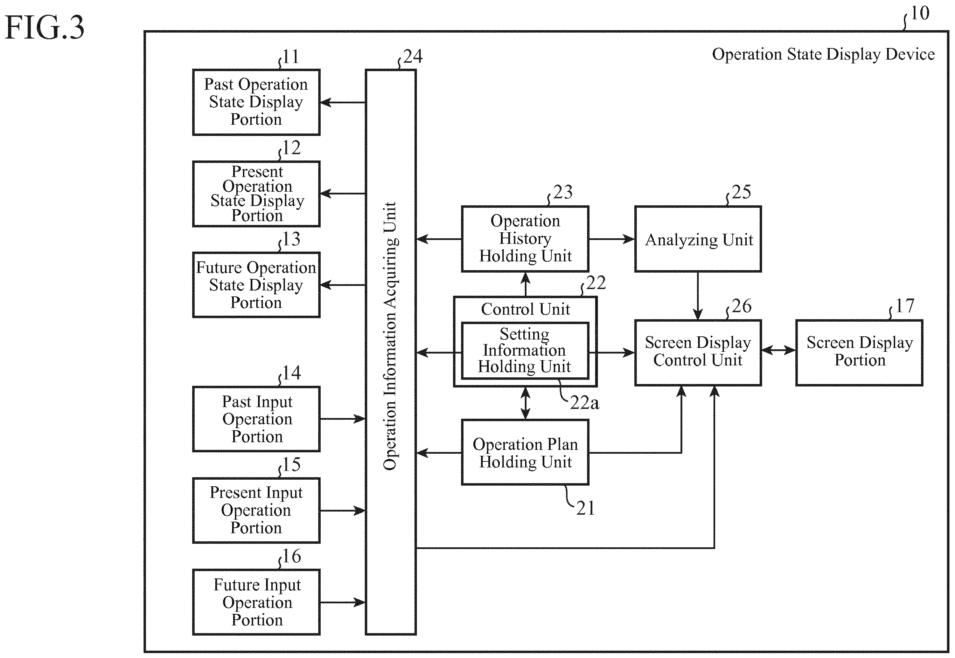

Further, as illustrated in Fig. 3, the operation state display device 10 includes: an operation plan holding unit 21 that stores the operation plan of the air-conditioning and hot water supply system 1; a control unit 22 that obtains the setting information from the operation plan and controls the operation of the air-conditioning and hot water supply system 1; an operation history holding unit 23 that acquires the setting information stored temporarily by a setting information holding unit 22a of the control unit 22, and stores the acquired setting information as the operation history; an operation information acquiring unit 24 that acquires these operation plan, setting information, and operation history; an analyzing unit 25 that analyzes the operation history; and a screen display control unit 26 that generates and controls the screen displayed in the screen display portion 17.

The operation plan holding unit 21 stores a time-series operation mode as the operation plan of the air-conditioning and hot water supply system 1. In this connection, as examples of the operation mode, three kinds including an energy saving mode, a comfort mode, and an energy saving and comfort mode are set.

The energy saving mode is the operation mode that assumes the case where a user is absent, and establishes an operation state that performs an operation in such a level that can prevent freezing of the pipe 7 and so on. The comfort mode is the operation mode that assumes the case where the user is in the room, and establishes the operation state that maintains higher the room temperature and maintains higher the remaining amount of hot water for hot water supply. The energy saving and comfort mode is the operation mode that assumes the case where the user is sleeping, and establishes the operation state that maintains higher the room temperature of a bed room and also lowers the room temperature of the other place, and maintains lower the remaining amount of hot water. In order to match conditions of these operation modes, there are set in the operation plan holding unit 21 the setting value of the room temperature to be targeted by the radiator 4, the setting value of the remaining amount of hot water in the hot water storage unit 3, the setting value of the temperature of the hot water to be supplied from the hot water storage unit 3 to the hydrant 5 and bathtub 6, and so on.

The control unit 22 controls each device of the air-conditioning and hot water supply system 1 in accordance with the operation plan, and maintains the room temperature and the remaining amount of hot water, etc. at the setting values. Further, the control unit 22 stores the setting values during control and the like as the setting information in the setting information holding unit 22a, and the setting information is moved to the operation history holding unit 23 before overwritten by new setting information.

The operation history holding unit 23 stores the past setting information as the operation history.

The operation plan holding unit 21, setting information holding unit 22a, and operation history holding unit 23 may be configured by a common storage element, a common storage device, or the like, or may each be configured by an independent storage element, an independent storage device, or the like. In addition, the control unit 22, operation information acquiring unit 24, analyzing unit 25, and screen display control unit 26 may be incorporated in, for example, a common microcomputer (hereinafter, referred to as micon), or may each be incorporated in a independent microcomputer. When reading and executing sequentially programs recorded in a built-in memory, the microcomputer executes functions (described later) as the control unit 22, operation information acquiring unit 24, analyzing unit 25, and screen display control unit 26.

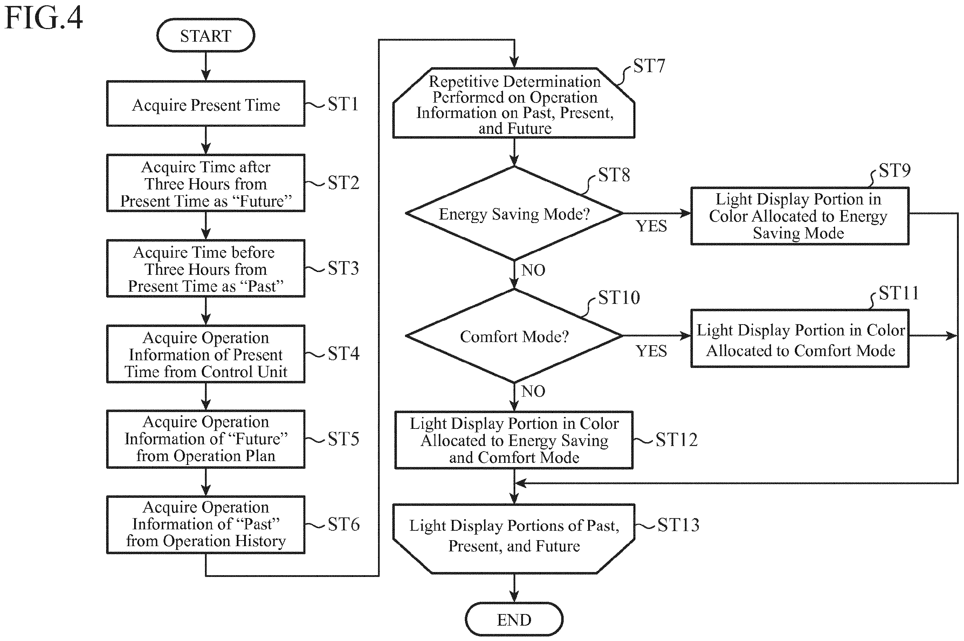

Next, a state display operation of the operation state display device 10 will be described with reference to a flowchart illustrated in Fig. 4.

First, in Step ST1, the operation information acquiring unit 24 acquires the present time counted by the microcomputer, and defines the time as "Present". In the subsequent Step ST2, the operation information acquiring unit 24 defines the time after a predetermined time from the present time defined in Step ST1 (for example, three hours ahead) as "Future". In the subsequent Step ST3, the operation information acquiring unit 24 defines the time before the predetermined time from the present time defined in Step ST1 (for example, three hours ago) as "Past".

When the present time is 18:00, for example, the past is 15:00, and the future is 21:00.

Subsequently, the operation information acquiring unit 24 acquires in Step ST4 the operation information of the time of the "Present" from the setting information holding unit 22a, acquires in Step ST5 the operation information of the time of the "Future" from the operation plan holding unit 21, and acquires in Step ST6 the operation information of the time of the "Past" from the operation history holding unit 23.

Subsequently, the operation information acquiring unit 24 performs repetitive determination of the operation mode with respect to the operation information on the "Past", "Present", and "Future" (Steps ST7 to ST13).

For example, when the operation mode of the "Past" is determined, first, in Step ST8, the operation information acquiring unit 24 determines whether the operation information on the "Past" is the energy saving mode. When the operation plan, setting information, and operation history are configured to include the information on the operation mode, the operation information acquiring unit 24 has only to determine whether the operation mode is the energy saving mode. When the operation plan, setting information, and operation history are not configured to include the information of the operation mode, the operation information acquiring unit 24 has only to collate an energy saving mode determination condition given in advance with a setting value such as the room temperature to determine whether the mode is the energy saving mode.

If the mode is determined as the energy saving mode ("YES" in Step ST8), the operation information acquiring unit 24 issues an instruction to the past operation state display portion 11, so that the past operation state display portion 11 is lighted in the color (blue, for example) allocated to the energy saving mode (Step ST9). If the mode is not determined as the energy saving mode ("NO" in Step ST8), in Step ST10, the operation information acquiring unit 24 determines whether the operation information of the "Past" is the comfort mode. A determination method of the comfort mode has only to be performed similarly to the determination method of the energy saving mode described above.

If the mode is determined as the comfort mode ("YES" in Step ST10), the operation information acquiring unit 24 issues the instruction to the past operation state display portion 11, so that the past operation state display portion 11 is lighted in the color (orange, for example) allocated to the comfort mode (Step ST11). If the mode is not determined as the comfort mode ("NO" in Step ST10), the operation information acquiring unit 24 issues the instruction to the past operation state display portion 11, so that the past operation state display portion 11 is lighted in the color (green, for example) allocated to the energy saving and comfort mode.

The operation information acquiring unit 24 determines the operation modes of the "Present" and "Future", in a similar manner to that of the "Past," so that the present operation state display portion 12 and future operation state display portion 13 are lighted in the color allocated to the operation mode. When the operation information acquiring unit 24 ends the determination of the operation information of the "Past", "Present", and "Future" (Step ST13), the repetitive determination processing is ended.

By the above operation, the past operation state display portion 11 is in a state lighted in green of the energy saving and comfort mode, the present operation state display portion 12 is in the state lighted in blue of the energy saving mode, and the future operation state display portion 13 is in the state lighted in orange of the comfort mode. Therefore, the user can know the past, current, and future operation modes by looking at the lighting colors from a place away from the operation state display device 10. As a result, the user can determine whether a setting change is necessary without approaching the operation state display device 10.

For example, when the user goes to bed, in the case that the present operation state display portion 12 and future operation state display portion 13 are lighted in orange indicating the comfort mode, the determination can be made that the settings of the present and future are changed from the comfort mode to the energy saving and comfort mode, and thus, the mode can be changed to the setting that improves the energy saving characteristic. Further, for example, when the user returns home, in the case that the present operation state display portion 12 is lighted in blue indicating the energy saving mode, the determination can be made that the present setting is changed from the energy saving mode to the comfort mode, and thus, the mode can be changed to the setting that improves comfortability.

Next, a changing method of the operation mode will be described.

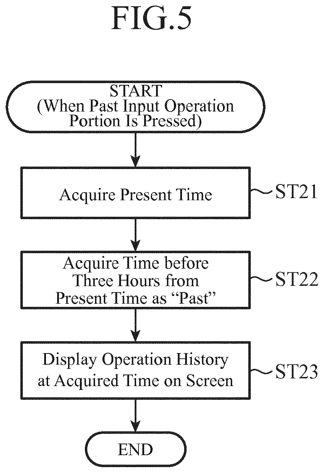

First, a screen transition operation of the operation state display device 10 when the past input operation portion 14 is pressed will be described with reference to a flowchart illustrated in Fig. 5.

When the user presses the past input operation portion 14, the operation information acquiring unit 24 that is notified of such an input operation from the past input operation portion 14 acquires the present time counted by the microcomputer, and defines that time as the "Present" (Step ST21). In the subsequent Step ST22, the operation information acquiring unit 24 defines the time before the predetermined time (for example, three hours ago) from the present time defined in Step ST21 as the "Past", and notifies the screen display control unit 26 of the time of the "Past". In the subsequent Step ST23, the screen display control unit 26 acquires from the analyzing unit 25 analyzed results conducted for a predetermined period with the time defined as the "Past" as a starting point, generates an operation history display screen, and displays the resultant in the screen display portion 17.

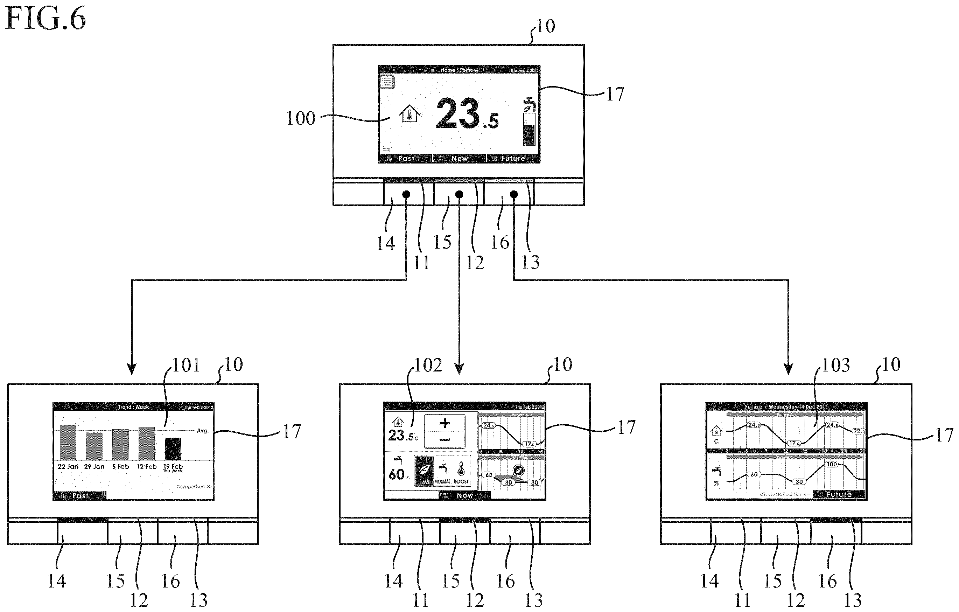

Here, Fig. 6 illustrates a screen transition example of the operation state display device 10. In this example, the analyzing unit 25 analyzes the operation history, and calculates a consumed heat amount per week. Then, when the past input operation portion 14 is pressed, the screen display control unit 26 generates a graph of the consumed heat amount in the past five weeks with the time of the "Past" as the starting time to provide an operation history display screen 101. Since the operation history display screen 101 is displayed by the pressing of the past input operation portion 14, it can be confirmed easily and quickly how much an energy saving effect is obtained by the change of the setting of the operation mode.

Incidentally, in the examples of Fig. 5 and Fig. 6, the screen display control unit 26 generates the operation history display screen 101 from the analyzed results by the analyzing unit 25. However, it is not limited to this, but the screen display control unit 26 may generate directly the operation history display screen 101 from the operation history stored in the operation history holding unit 23.

Further, the screen display control unit 26 may perform an operation of, for example, switching to the graph of the consumed heat amount on a weekly basis, daily basis, or hourly basis in response to a user' s touch operation onto the screen display portion 17.

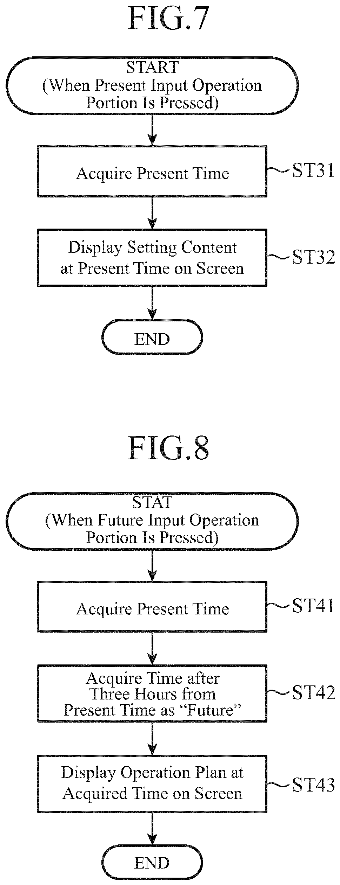

Next, the screen transition operation of the operation state display device 10 when the present input operation portion 15 is pressed will be described with reference to a flowchart illustrated in Fig. 7.

When the user presses the present input operation portion 15, the operation information acquiring unit 24 that is notified of the above input operation from the present input operation portion 15 acquires the present time counted by the microcomputer, defines the time as the "Present", and notifies the screen display control unit 26 of the time of the "Present" (Step ST31) . In the subsequent Step ST32, the screen display control unit 26 acquires the setting information of the time defined as the "Present" from the setting information holding unit 22a, generates a setting content display screen, and displays the resultant in the screen display portion 17.

In the example of Fig. 6, when the present input operation portion 15 is pressed, the screen display control unit 26 acquires the setting values of the room temperature and the remaining amount of hot water of the "Present" from the setting information holding unit 22a, and generates a setting content display screen 102. For example, when the user touch-operates a "+" or "-" button of the setting content display screen 102, the screen display control unit 26 notifies the control unit 22 of the touch operation, and the control unit 22 increases or decreases the setting value of the room temperature. Further, for example, when the user touch-operates a "SAVE", "NORMAL", or "BOOST" button of the setting content display screen 102, the screen display control unit 26 notifies the control unit 22 of the above touch operation, and the control unit 22 changes the setting value of the remaining amount of hot water. Alternatively, it may also be configured that a selection button of the operation mode is displayed in the setting content display screen 102 to thus change the setting of the present operation mode. Since the setting content display screen 102 is displayed by the pressing of the present operation state display portion 12, the user can change the present setting quickly and easily.

Next, the screen transition operation of the operation state display device 10 when the future input operation portion 16 is pressed will be described with reference to a flowchart illustrated in Fig. 8.

When the user presses the future input operation portion 16, the operation information acquiring unit 24 that is notified of the above input operation from the future input operation portion 16 acquires the present time counted by the microcomputer, and defines the time as the "Present" (Step ST41) . In the subsequent Step ST42, the operation information acquiring unit 24 defines the time after the predetermined time (for example, three hours ahead) from the present time defined in Step ST41 as the "Future", and notifies the screen display control unit 26 of the time of the "Future". In the subsequent Step ST43, the screen display control unit 26 acquires from the operation plan holding unit 21 the operation plan for the predetermined period with the time defined as the "Future" as the starting point, generates an operation plan display screen, and displays the resultant in the screen display portion 17.

In the example of Fig. 6, when the future input operation portion 16 is pressed, the screen display control unit 26 acquires the setting values of the room temperature and the remaining amount of hot water for about one day from now on with the time of the "Future" as the starting point, generates the graph, and provides an operation plan display screen 103. For example, when the user slides vertically by the touch operation a graph curve line of the operation plan display screen 103, the screen display control unit 26 notifies the control unit 22 of the operation amount of the slide operation. The control unit 22 increases or decreases the setting value of the operation plan of the operation plan holding unit 21 according to the operation amount. Since the operation plan display screen 103 is displayed by the pressing of the future operation state display portion 13, the user can change the operation plan quickly and easily.

Incidentally, the operation history display screen 101, setting content display screen 102, and operation plan display screen 103 are not limited to the example of Fig. 6, and may be the screens concerning the history of the past operation state, the setting of the present operation state, and the setting of the future operation state, respectively.

As described above according to Embodiment 1, the operation state display device 10 is configured to include: the operation information acquiring unit 24 that acquires the information on the past, present, and future operation states of the air-conditioning and hot water supply system 1; the past operation state display portion 11, present operation state display portion 12, and future operation state display portion 13 that are lighted in the lighting colors indicating the past, present, and future operation states, respectively, based on the information acquired by the operation information acquiring unit 24; the screen display portion 17 that displays the operation history display screen 101, setting content display screen 102, or operation plan display screen 103; and the input operation portion that receives the input operation for selecting the operation history display screen 101, the setting content display screen 102, or the operation plan display screen 103 to be displayed in the screen display portion 17. As described above, when the portions are lighted in the lighting colors indicating not only the present operation state but also the past and future operation states, a situation requiring the setting change of the air-conditioning and hot water supply system 1 can be brought to be noticed easily at an early stage. Further, when the past input operation portion 14 receives a screen selection of the operation history display screen 101, the present input operation portion 15 receives the screen selection of the setting content display screen 102, and the future input operation portion 16 receives the screen selection of the operation plan display screen 103 to be displayed in the screen display portion 17, in the case that the setting change of the air-conditioning and hot water supply system 1 is necessary, the screen for the setting change can be displayed quickly and easily, and the setting change can be carried out easily.

Further, according to Embodiment 1, in the operation state display device 10, the operation state display portion includes: the present operation state display portion 12 that indicates the present operation state in the lighting color; the past operation state display portion 11 that indicates in the lighting color the past operation state before the predetermined time from the present; and the future operation state display portion 13 that indicates in the lighting color the future operation state after the predetermined time from the present; the past operation state display portion 11, present operation state display portion 12, and future operation state display portion 13 are configured to be arranged in a row in this order; the input operation portion is configured to include: the past input operation portion 14 that is adjacent to the past operation state display portion 11 and receives the input operation of displaying the operation history display screen 101 in the screen display portion 17; the present input operation portion 15 that is adjacent to the present operation state display portion 12 and receives the input operation of displaying the setting content display screen 102 in the screen display portion 17; and the future input operation portion 16 that is adjacent to the future operation state display portion 13 and receives the input operation of displaying the operation plan display screen 103 in the screen display portion 17. As described above, the operation state display portion and input operating portion concerning each of the past, present, and future are disposed close to each other, which facilitates a user's intuitive operation therefor.

Additionally, in the example of Fig. 1, the past operation state display portion 11 and past input operation portion 14 are disposed adjacently; however, these portions may be integrated such that the LED of the past operation state display portion 11 is installed inside the button of the past input operation portion 14. This can be similarly applied to the present operation state display portion 12 and the future operation state display portion 13.

### Embodiment 2 of the invention.

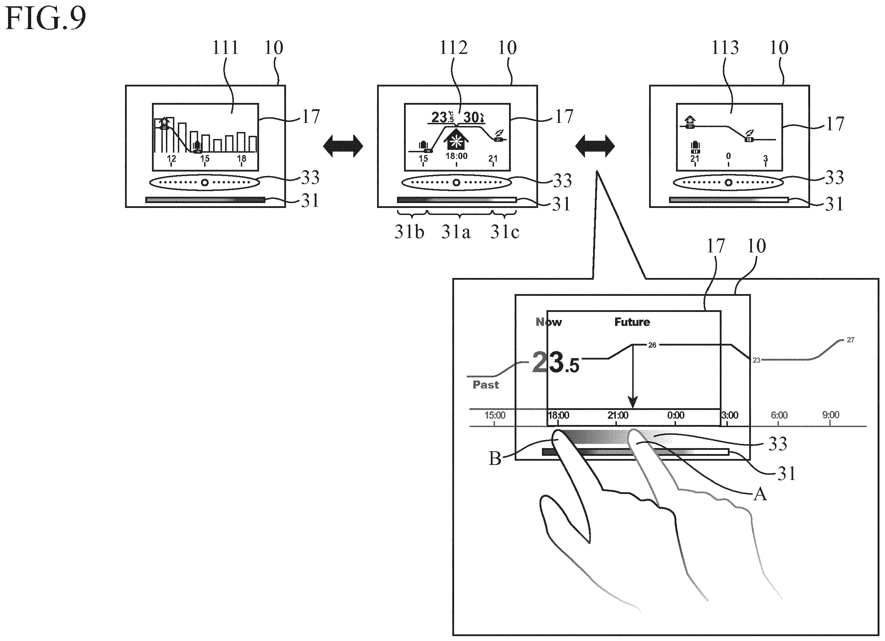

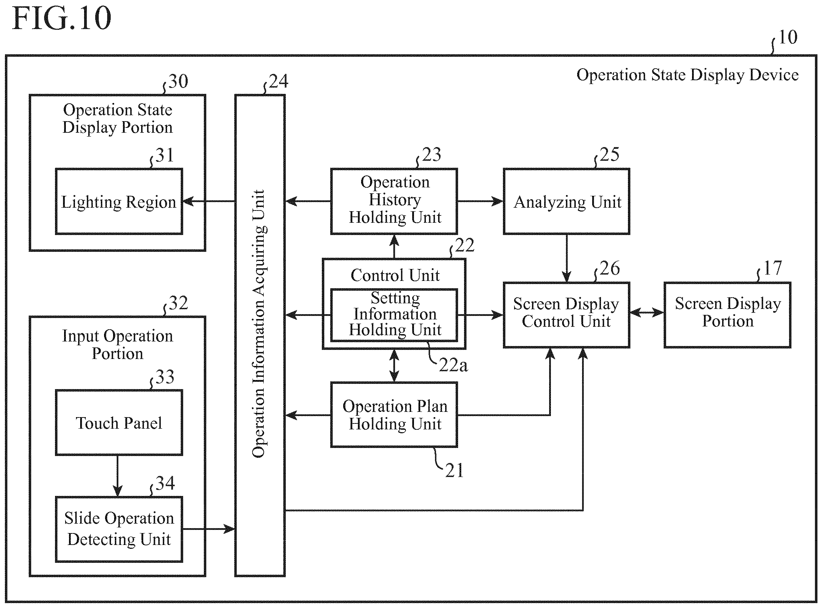

Fig. 9 is an external view illustrating a configuration example of a front surface of a casing of an operation state display device 10 according to Embodiment 2 of the present invention, and is a screen transition example of an operation history display screen 111 of the past, a setting content display screen 112 of the present, and an operation plan display screen 113 of the future. Fig. 10 is a block diagram showing a configuration example of the operation state display device 10. In Figs. 9 and 10, the components that are the same as or corresponding to those in Fig. 1 to Fig. 3 are denoted by the same symbols, and their descriptions will be omitted.

As illustrated in Fig. 9, on the front surface of the casing of the operation state display device 10 according to Embodiment 2, there is disposed an operation state display portion 30 that is lighted in the lighting colors indicating the past, present, and future operation modes (operation states) of the air-conditioning and hot water supply system 1 (Fig. 2) with a time-series arrangement. The operation state display portion 30 is configured to have a lighting region 31 in which LEDs capable of lighting the plurality of lighting colors of blue, orange, green, and the like, for example, are arranged in a row, and the LEDs arranged in the row and the time axis are in a correspondence relationship. In the example of Fig. 9, the screen display portion 17 displays the time axis that is set in the lighting region 31.

In addition, on the front surface of the casing, there is disposed an input operation portion 32 that receives an input operation for displaying in the screen display portion 17 screens concerning a past operation history, present setting information, and future operation plan. The input operation portion 32 includes a touch panel 33 disposed on the front surface of the casing, and a slide operation detecting unit 34 (Fig. 10) that detects a user's slide operation to the touch panel 33.

An operation of an operation information acquiring unit 24 is performed approximately along the flowchart illustrated in Fig. 4, and therefore, it will be described here by citing Fig. 4. When there is no notification of a slide operation detection from the slide operation detecting unit 34 (that is, when there is no slide operation to the touch panel 33), the operation information acquiring unit 24 first acquires the present time counted by a microcomputer, and defines that time as "Present" (Step ST1 in Fig. 4). Subsequently, the operation information acquiring unit 24 partitions the time axis at every predetermined time (every three hours, for example) toward past and future directions with the time defined as the "Present" as a starting point (Steps ST2 and ST3), and acquires the operation information at each partitioned time from an operation plan holding unit 21, a setting information holding unit 22a, and an operation history holding unit 23 (Steps ST4 to ST6). Subsequently, the operation information acquiring unit 24 performs repetitive determination on the operation mode with respect to the operation information for each partitioned time, and lights the LED in the lighting region 31 of each partitioned time in the color allocated to the operation mode (Steps ST7 to ST13).

Further, at this time, the operation information acquiring unit 24 notifies the screen display control unit 26 of the time of the "Present" and the information of the time axis set in the lighting region 31. Based on the notification, the screen display control unit 26 generates the time axis to be displayed in the screen display portion 17. Further, the screen display control unit 26 acquires the setting value of the room temperature at each time of the notified time axis from the operation plan holding unit 21, setting information holding unit 22a, and operation history holding unit 23, and generates a time-series heat curve line. Further, the screen display control unit 26 acquires the setting information (setting values of a room temperature and a remaining amount of hot water) at the present time from the setting information holding unit 22a, and generates a setting content display screen 112 having the setting information superposed with the time axis and heat curve line, and displays the resultant in the screen display portion 17.

By the above operation, the lighting region 31 of the operation state display portion 30 is in a state lighted in the lighting color indicating the operation mode of each time along the time axis from the past to the future including the present time. In the setting content display screen 112 in Fig. 9, a region 31a of the lighting region 31 corresponding to 15:00 to 21:00 including the present time 18:00 is lighted in orange indicating a comfort mode, a region 31b thereof corresponding to the past time from 15:00 is lighted in blue indicating an energy saving mode, and a region 31c thereof corresponding to the future time from 21:00 is in the state lighted in green indicating an energy saving and comfort mode. Therefore, the user can know the past, present, and future operation modes by looking at the lighting color at a position separated from the operation state display device 10 to thereby determine whether a setting change is necessary, without approaching the operation state display device 10.

On the other hand, when the slide operation detecting unit 34 detects the slide operation to the touch panel 33, the operation information acquiring unit 24 moves the time axis of the lighting region 31 toward the past or future direction by the time corresponding to an amount of the slide operation in linkage with a direction of the detected slide operation. For example, as illustrated in Fig. 9, when the user slide-operates from a point A to a point B of the touch panel 33, the operation information acquiring unit 24 moves the time axis of the lighting region 31 in the past direction by about three hours in linkage with the slide operation. Then, the operation information acquiring unit 24 lights the LED in the lighting region 31 in the color allocated to the operation mode at each predetermined time of the moved time axis .

Further, at this time, the operation information acquiring unit 24 notifies the screen display control unit 26 of the information on the moved time axis in the lighting region 31. Based on this notification, the screen display control unit 26 controls the time axis and the heat curve line to be displayed in the screen display portion 17 such that the time axis and the heat curve line are linked with the movement of the time axis in the lighting region 31.

After completion of the slide operation, when the time axis in the lighting region 31 corresponds to the past from the time of the "Present", the screen display control unit 26 acquires from the analyzing unit 25 the analyzed results of the operation history corresponding to that time axis, and generates the operation history display screen 111 having the analyzed results superposed with the time axis and the heat curve line, and displays the resultant in the screen display portion 17. On the other hand, when the time axis in the lighting region 31 corresponds to the future from the time of the "Present", the screen display control unit 26 acquires from the operation plan holding unit 21 the operation plan corresponding to that time axis, and generates the future operation plan display screen 113 having the operation plan superposed with the time axis and the heat curve line, and displays the resultant in the screen display portion 17.

By the above operation, since the lighting color on the time axis in the lighting region 31 changes in linkage with the slide operation, the user can naturally switch the time axis in a sense of scrolling the lighting region 31 with a slider. Accordingly, the user can confirm the operation history quickly and easily, and also change the settings of the present and future. Further, a simple user interface can be achieved in such a manner that the heat curve lines in all the three screens of the operation history display screen 111, setting content display screen 112, and operation plan display screen 113 are displayed so as to establish seamless connection between the screens.

As described above, according to Claim 2, the following configuration is provided: the input operation portion 32 has the touch panel 33, and the slide operation detecting unit 34 that detects the slide operation to the touch panel 33; and the operation state display portion 30 has the lighting region 31 that lights the lighting colors indicating the past, present and future operation states and arranged along the time axis, whereby the time axis in the lighting region 31 is moved in the past or future direction in linkage with the slide operation detected by the input operation portion 32 to thus change the lighting color in accordance with the movement of the time axis. For this reason, it is possible to notice at an early stage the situation requiring the setting change of the air-conditioning and hot water supply system 1.

Further, according to Embodiment 2, the screen display portion 17 is configured to display the operation history display screen 111, setting content display screen 112, and operation plan display screen 113 corresponding to the time axis in the lighting region 31. For this reason, when the setting change of the air-conditioning and hot water supply system 1 is necessary, the screen for the setting change can be displayed quickly and easily to thereby carry out the setting change easily.

Additionally, in the example of Fig. 9, the lighting region 31 of the operation state display portion 30 and the touch panel 33 of the input operation portion 32 are disposed adjacently; however, an integration may also be achieved by, for example, replacing the touch panel 33 with a touch display to add the function of the lighting region 31 thereto.

Further, in each of Embodiments 1 and 2, the past operation state display portion 11, present operation state display portion 12, future operation state display portion 13, and operation state display portion 30 are disposed on the front surface of the casing of the operation state display device 10, but the disposition is not limited to this position, and these portions may be disposed at a position where the illuminations lighted by these display portions can be seen on the front surface of the casing.

Furthermore, in each of Embodiments 1 and 2, there is described the example in which the operation state display device 10 is applied to the heat-pump type air-conditioning and hot water supply system 1; however, the operation state display device 10 may be applied to an air conditioner different from this. Moreover, as examples of the operation mode of the air-conditioning and hot water supply system 1, the three modes including the energy saving mode, comfort mode, and energy saving and comfort mode are specified, but the mode is not limited to these operation modes.

### INDUSTRIAL APPLICABILITY

As mentioned above, according to the operation state display device of the present invention, when it is lighted in the lighting colors indicating the past, present, and future operation states to change the setting to the optimum one at the early stage, and it is thus suitable for an application to, for example, an air conditioner having a characterization in which it takes time for the actual room temperature and so on to reach the set value from the time of the setting change.

### DESCRIPTION OF REFERENCE NUMERALS and SIGNS

- 1:: AIR-CONDITIONING AND HOT WATER SUPPLY SYSTEM (AIR CONDITIONER)
- 2:: HEAT PUMP UNIT
- 3:: HOT WATER STORAGE UNIT
- 4:: RADIATOR
- 5:: HYDRANT
- 6:: BATHTUB
- 7:: PIPE
- 10:: OPERATION STATE DISPLAY DEVICE
- 11:: PAST OPERATION STATE DISPLAY PORTION
- 12:: PRESENT OPERATION STATE DISPLAY PORTION
- 13:: FUTURE OPERATION STATE DISPLAY PORTION
- 14:: PAST INPUT OPERATION PORTION
- 15:: PRESENT INPUT OPERATION PORTION
- 16:: FUTURE INPUT OPERATION PORTION
- 17:: SCREEN DISPLAY PORTION
- 21:: OPERATION PLAN HOLDING UNIT
- 22:: CONTROL UNIT
- 22a:: SETTING INFORMATION HOLDING UNIT
- 23:: OPERATION HISTORY HOLDING UNIT
- 24:: OPERATION INFORMATION ACQUIRING UNIT
- 25:: ANALYZING UNIT
- 26:: SCREEN DISPLAY CONTROL UNIT
- 30:: OPERATION STATE DISPLAY PORTION
- 31:: LIGHTING REGION
- 32:: INPUT OPERATION PORTION
- 33:: TOUCH PANEL
- 34:: SLIDE OPERATION DETECTING UNIT
- 100:: INITIAL SCREEN
- 101, 111:: OPERATION HISTORY DISPLAY SCREEN
- 102, 112:: SETTING CONTENT DISPLAY SCREEN
- 103, 113:: OPERATION PLAN DISPLAY SCREEN.

## Claims

1. An operation state display device displaying an operation state of an air conditioner, comprising:
an operation information acquirer (24) that acquires information on past, present, and future operation states;
an operation state display portion (11, 12, 13) that is lighted at fixed positions in lighting colors indicating past, present, and future operation states, respectively, based on the information acquired by the operation information acquirer; and
a screen display portion (17) that displays a screen concerning a history of the past operation state, a setting of the present operation state, or the setting of the future operation state, and
an input operation portion (14, 15, 16) that receives an input operation for selecting the screen of the past, present, or future, to be displayed in the screen display portion.

2. The operation state display device according to claim 1, wherein
the operation state display portion has:
a present operation state display portion (12) that indicates the present operation state in the lighting color;
a past operation state display portion (11) that indicates in the lighting color the past operation state before a predetermined time from the present; and
a future operation state display portion (13) that indicates in the lighting color the future operation state after the predetermined time from the present, and
the past operation state display portion (11), the present operation state display portion (12), and the future operation state display portion (13) are configured to be arranged in a row in this order, and
the input operation portion has:
a past input operation portion (14) disposed adjacently to or in superposition on the past operation state display portion, and receiving an input operation of displaying a screen of the past in the screen display portion;
a present input operation portion (15) disposed adjacently to or in superposition on the present operation state display portion, and receiving the input operation of displaying the screen of the present in the screen display portion; and
a future input operation portion (16) disposed adjacently to or in superposition on the future operation state display portion, and receiving the input operation of displaying the screen of the future in the screen display portion.

3. The operation state display device according to claim 1, wherein
the input operation portion has a touch panel, and detects a slide operation to the touch panel, and
the operation state display portion has a lighting region that is lighted in the lighting colors indicating the past, present and future operation states and arranged along a time axis, and moves the time axis in the lighting region in a past or future direction in linkage with the slide operation detected by the input operation portion to change the lighting color in accordance with the movement of the time axis.

4. The operation state display device according to claim 3, wherein the screen display portion displays the screen concerning the history or setting of the operation state corresponding to the time axis in the lighting region.

5. An air conditioner having an operation state display device according to one of the proceeding claims displaying an operation state.

## Patentansprüche

1. Betriebszustand-Anzeigeeinrichtung, anzeigend einen Betriebszustand einer Klimaanlage, umfassend:
einen Betriebsinformationen-Erwerber (24), der Informationen über vergangene, gegenwärtige und zukünftige Betriebszustände erwirbt;
einen Betriebszustand-Anzeigeabschnitt (11, 12, 13), der an festen Positionen in Beleuchtungsfarben beleuchtet wird, die jeweils vergangene, gegenwärtige und zukünftige Betriebszustände anzeigen, auf Grundlage der von dem Betriebsinformationen-Erwerber erworbenen Informationen; und
einen Bildschirm-Anzeigeabschnitt (17), der einen Bildschirm anzeigt, der eine Historie des vergangenen Betriebszustands, eine Einstellung des gegenwärtigen Betriebszustands oder die Einstellung des zukünftigen Betriebszustands betrifft, und
einen Eingabe-Operationsabschnitt (14, 15, 16), der eine Eingabe-Operation zum Auswählen des Bildschirms der Vergangenheit, der Gegenwart oder der Zukunft empfängt, der in dem Bildschirm-Anzeigeabschnitt anzuzeigen ist.

2. Betriebszustand-Anzeigeeinrichtung nach Anspruch 1, wobei
der Betriebszustand-Anzeigeabschnitt aufweist:
einen Gegenwärtiger-Betriebszustand-Anzeigeabschnitt (12), der den gegenwärtigen Betriebszustand in der Beleuchtungsfarbe anzeigt;
einen Vergangener-Betriebszustand-Anzeigeabschnitt (11), der in der Beleuchtungsfarbe den vergangenen Betriebszustand vor einer vorherbestimmten Zeit von der Gegenwart anzeigt; und
einen Zukünftiger-Betriebszustand-Anzeigeabschnitt (13), der in der Beleuchtungsfarbe den zukünftigen Betriebszustand nach der vorherbestimmten Zeit von der Gegenwart anzeigt; und
der Vergangener-Betriebszustand-Anzeigeabschnitt (11), der Gegenwärtiger-Betriebszustand-Anzeigeabschnitt (12) und der Zukünftiger-Betriebszustand-Anzeigeabschnitt (13) eingerichtet sind, in einer Reihe dieser Reihenfolge angeordnet zu werden, und
der Eingabe-Operationsabschnitt aufweist:
einen Vergangene-Eingabe-Operationsabschnitt (14), der neben oder in Überlagerung auf dem Vergangener-Betriebszustand-Anzeigeabschnitt angeordnet ist, und eine Eingabe-Operation des Anzeigens eines Bildschirms der Vergangenheit in dem Bildschirm-Anzeigeabschnitt empfängt;
einen Gegenwärtige-Eingabe-Operationsabschnitt (15), der neben oder in Überlagerung auf dem Gegenwärtiger-Betriebszustand-Anzeigeabschnitt angeordnet ist, und
die Eingabe-Operation des Anzeigens des Bildschirms der Gegenwart in dem Bildschirms-Anzeigeabschnitt empfängt; und
einen Zukünftige-Eingabe-Operationsabschnitt (16), der neben oder in Überlagerung auf dem Zukünftiger-Betriebszustand-Anzeigeabschnitt angeordnet ist, und die Eingabe-Operation des Anzeigens des Bildschirms der Zukunft in dem Bildschirm-Anzeigeabschnitt empfängt.

3. Betriebszustand-Anzeigeeinrichtung nach Anspruch 1, wobei
der Eingabe-Operationsabschnitt ein Berührungsfeld aufweist und eine Wisch-Operation auf dem Berührungsfeld erfasst, und
der Betriebszustand-Anzeigeabschnitt einen Beleuchtungsbereich aufweist, der in den Beleuchtungsfarben beleuchtet wird, die die vergangenen, gegenwärtigen und zukünftigen Betriebszustände anzeigen, und entlang einer Zeitachse angeordnet ist, und die Zeitachse in dem Beleuchtungsbereich in einer vergangenen oder zukünftigen Richtung in Verbindung mit der Wisch-Operation bewegt, die durch den Eingabe-Operationsabschnitt erfasst wird, um die Beleuchtungsfarbe in Übereinstimmung mit der Bewegung der Zeitachse zu ändern.

4. Betriebszustand-Anzeigeeinrichtung nach Anspruch 3, wobei der Bildschirm-Anzeigeabschnitt den Bildschirm, der die Historie oder Einstellung des Betriebszustands betrifft, entsprechend der Zeitachse in dem Beleuchtungsbereich anzeigt.

5. Klimaanlage, aufweisend eine Betriebszustand-Anzeigeeinrichtung nach einem der vorangehenden Ansprüche, anzeigend einen Betriebszustand.

## Revendications

1. Dispositif d'affichage d'état de fonctionnement affichant un état de fonctionnement d'un climatiseur, comprenant :
un dispositif d'acquisition d'informations de fonctionnement (24), qui acquiert des informations sur les états de fonctionnement passés, présents, et futurs ;
une partie affichage d'état de fonctionnement (11, 12, 13) qui est éclairé à des positions fixes avec des couleurs d'éclairage indiquant les états de fonctionnement passés, présents, et futurs, respectivement, sur la base des informations acquises par le dispositif d'acquisition d'informations de fonctionnement ; et
une partie affichage d'écran (17), qui affiche un écran concernant un historique de l'état de fonctionnement passé, un réglage de l'état de fonctionnement présent, ou le réglage de l'état de fonctionnement futur, et
une partie opération d'entrée (14, 15, 16) qui reçoit une opération d'entrée destinée à sélectionner l'écran du passé, du présent, ou du futur, à afficher dans la partie affichage d'écran.

2. Dispositif d'affichage d'état de fonctionnement selon la revendication 1, dans lequel
la partie affichage d'état de fonctionnement a :
une partie affichage d'état de fonctionnement présent (12) qui indique l'état de fonctionnement présent dans la couleur d'éclairage ;
une partie affichage d'état de fonctionnement passé (11) qui indique dans la couleur d'éclairage l'état de fonctionnement passé avant une période de temps prédéterminée à partir du présent ; et
une partie affichage d'état de fonctionnement futur (13) qui indique dans la couleur d'éclairage l'état de fonctionnement futur après une période de temps prédéterminée à partir du présent, et
la partie affichage d'état de fonctionnement passé (11), la partie affichage d'état de fonctionnement présent (12), et la partie affichage d'état de fonctionnement futur (13) sont configurées afin d'être agencées en une ligne dans cet ordre, et
la partie opération d'entrée présente :
une partie opération d'entrée du passé (14) disposée adjacente ou superposée à la partie affichage d'état de fonctionnement passé, et recevant une opération d'entrée affichant un écran du passé dans la partie affichage d'écran ;
une partie opération d'entrée du présent (15) disposée adjacente ou superposée à la partie affichage d'état de fonctionnement présent, et
recevant l'opération d'entrée affichant l'écran du présent dans la partie affichage d'écran ; et
une partie opération d'entrée du futur (16) disposée adjacente ou superposée à la partie affichage d'état de fonctionnement futur, et recevant l'opération d'entrée affichant l'écran du futur dans la partie affichage d'écran.

3. Dispositif d'affichage d'état de fonctionnement selon la revendication 1, dans lequel
la partie opération d'entrée a un écran tactile, et détecte une opération de glissé sur l'écran tactile, et
la partie affichage d'état de fonctionnement a une région d'éclairage qui est éclairée dans les couleurs d'éclairage indiquant les états de fonctionnement passés, présents et futurs et agencée le long d'un axe du temps, et déplace l'axe du temps dans la région d'éclairage dans la direction du passé ou du futur en liaison avec l'opération de glissé détectée par la partie opération d'entrée pour modifier la couleur d'éclairage selon le déplacement de l'axe du temps.

4. Dispositif d'affichage d'état de fonctionnement selon la revendication 3, dans lequel la partie affichage d'écran affiche l'écran concernant l'historique ou un réglage de l'état de fonctionnement correspondant à l'axe du temps dans la région d'éclairage.

5. Climatiseur présentant un dispositif d'affichage d'état de fonctionnement selon l'une quelconque des revendications précédentes affichant un état de fonctionnement.
